# EUROPEAN PATENT SPECIFICATION

(11) **EP 4 412 105 B1**
(45) Date of publication and mention of the grant of the patent: **11.11.2026**
(21) Application number: 21965639.4
(22) Date of filing: 25.11.2021
(51) Int. Cl.: H04B 7/185, H04B 7/15

(54) **SIGNAL CONTROL DEVICE, FLOW CONTROL DEVICE, COMMUNICATION DEVICE, CONTROL CIRCUIT, STORAGE MEDIUM, PROGRAM, AND SIGNAL CONTROL METHOD**
SIGNALSTEUERUNGSVORRICHTUNG, FLUSSSTEUERUNGSVORRICHTUNG, KOMMUNIKATIONSVORRICHTUNG, STEUERSCHALTUNG, SPEICHERMEDIUM, PROGRAMM UND SIGNALSTEUERUNGSVERFAHREN
DISPOSITIF DE COMMANDE DE SIGNAL, DISPOSITIF DE COMMANDE DE FLUX, DISPOSITIF DE COMMUNICATION, CIRCUIT DE COMMANDE, SUPPORT DE STOCKAGE, PROGRAMME ET PROCÉDÉ DE COMMANDE DE SIGNAL

(43) Date of publication of application: 07.08.2024
(73) Proprietor: MITSUBISHI ELECTRIC CORPORATION, Chiyoda-ku Tokyo 100-8310 (JP)
(72) Inventor: KANEKO, Kazuma, Tokyo 100-8310 (JP)
(74) Representative: Plasseraud IP
(86) International application number: PCT/JP2021/043277
(87) International publication number: WO 2023/095267

(56) References cited:
- WO-A1-2019/171430
- JP-A- 2002 330 092
- JP-A- 2009 212 665
- JP-A- 2013 207 734
- US-A1- 2010 322 150
- US-A1- 2010 322 150

## Description

### Field

The present disclosure relates to a communication system, a communication apparatus and a signal control method for performing wireless communication with a base station on the ground in an environment in which radio waves are periodically blocked.

### Background

For communication between a helicopter moving in a wide area and a ground station, a helicopter-installed satellite communication system has been put to practical use in which communication is performed via a communication satellite. Here, signals transmitted from the helicopter side are blocked by the rotor blades of the helicopter. That is, the rotor blades of the helicopter are present on an antenna line between a communication apparatus and the communication satellite, and thus signals are periodically blocked by the rotor blades in the helicopter-installed satellite communication system. Patent Literature 1 discloses a technique to duplicate and delay a transmission signal to allow the reception side to reconstruct the transmission signal even in a blocked interval during which part of a signal is blocked by the rotor blades. Patent Literature 2 discloses techniques for enabling broadband data rates at mobile terminals in a beyond-line-of-sight communication system.

### Citation List

### Patent Literature

Patent Literature 1: Japanese Patent Application Laid-open No. 2020-10214
Patent Literature 2: US 2010/322150

### Summary

### Technical Problem

In the technique described in Patent Literature 1, an output of a communication device is duplicated and delayed to transmit two wave signals, to ensure arrival against the blocking of the rotor blades. However, there is a problem that a signal transmitted in a blocked interval is reflected off the rotor blades to become an interference wave affecting the ground. Furthermore, there is a problem that both of two wave signals may be blocked by the rotor blades under circumstances where the blocking rate of the rotor blades is high.

The present disclosure has been made in view of the above. It is an object of the present disclosure to provide a signal control device capable of transmitting a signal without blockage while preventing generation of an interference wave to the ground due to the reflection of a signal under circumstances where a signal blocking rate is high.

### Solution to Problem

In order to solve the above-described problems and achieve the object, a communication system according to claim 1, a communication apparatus according to claim 3 and a signal control method according to claim 4 are provided.

### Advantageous Effects of Invention

The signal control device according to the present disclosure has the effect of being able to transmit a signal without blockage while preventing generation of an interference wave to the ground due to the reflection of a signal under circumstances where a signal blocking rate is high.

### Brief Description of Drawings

FIG. 1 is a diagram schematically illustrating an example of a configuration of a communication system according to a first embodiment.
FIG. 2 is a block diagram illustrating an example of a configuration of a communication apparatus according to the first embodiment.
FIG. 3 is a block diagram illustrating an example of a configuration of a signal control device used in the communication apparatus according to the first embodiment.
FIG. 4 is a diagram schematically illustrating an example of a signal transmitted from a communication device.
FIG. 5 is a flowchart illustrating an example of a procedure of a communication control method in the communication apparatus according to the first embodiment.
FIG. 6 is a flowchart illustrating the example of the procedure of the communication control method in the communication apparatus according to the first embodiment.
FIG. 7 is a diagram schematically illustrating an example of transmission signal generation processing in the signal control device according to the first embodiment.
FIG. 8 is a diagram illustrating an example of a delay time setting method.
FIG. 9 is a block diagram illustrating an example of a configuration of a signal control device used in a communication apparatus according to a second embodiment.
FIG. 10 is a diagram schematically illustrating an example of transmission signal generation processing in the communication apparatus according to the second embodiment.
FIG. 11 is a flowchart illustrating an example of a procedure of a communication control method in the communication apparatus according to the second embodiment.
FIG. 12 is a flowchart illustrating the example of the procedure of the communication control method in the communication apparatus according to the second embodiment.
FIG. 13 is a diagram illustrating an example of a hardware configuration of a control circuit.

### Description of Embodiments

Hereinafter, a signal control device, a flow control device, a communication apparatus, a control circuit, a storage medium, a program, and a signal control method according to embodiments of the present disclosure will be described in detail with reference to the drawings.

As described above, the technique described in Patent Literature 1 has the problems that a signal transmitted from the communication device of the helicopter in a blocked interval is reflected off the rotor blades to become an interference wave affecting the ground, and both of two wave signals may be blocked by the rotor blades in circumstances where the blocking rate of the rotor blades is high. When a data generation device such as an encoder that performs video output and the communication device are configured with different devices in the helicopter, a flow control device that performs timing control of the transmission signal between the data generation device and the communication device can be provided to achieve flow control at the Internet Protocol (IP) packet level. Thus, by controlling the transmission timing of a transmission signal according to the blocking period of the rotor blades, interference caused by the transmission of a signal during blocking by the rotor blades is avoided, and reliable communication becomes possible even in an environment with a high blocking rate. However, this technique has a problem that although data generated by the data generation device can be adjusted in transmission timing by the flow control device, control signals generated in the communication device are generated in a stage subsequent to the flow control device that performs flow control, and thus cannot be controlled in transmission timing and may be blocked by the rotor blades. The following describes a communication apparatus capable of transmitting a signal, particularly a signal generated in a communication device so that the transmission signal is not blocked and reflected by the rotor blades and does not become an interference wave to the ground even under circumstances where the rate of radio wave blocking by the rotor blades is high.

### First Embodiment.

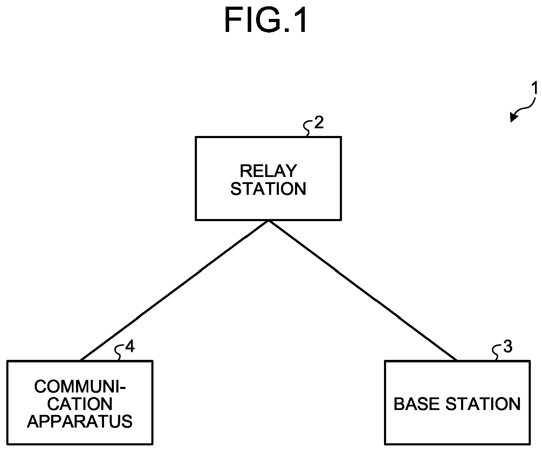

FIG. 1 is a diagram schematically illustrating an example of a configuration of a communication system according to a first embodiment. A communication system 1 includes a relay station 2, a base station 3, and a communication apparatus 4. The relay station 2 and the base station 3, and the relay station 2 and the communication apparatus 4 are wirelessly connected. That is, the communication apparatus 4 and the base station 3 are wirelessly connected via the relay station 2.

The relay station 2 is an apparatus that relays wireless communication between the base station 3 and the communication apparatus 4. In the first embodiment, the relay station 2 is an apparatus disposed in a space away from the ground, such as a communication satellite or a mobile object staying high in the air, to relay wireless communication. The base station 3 is an apparatus that communicates with the communication apparatus 4 via the relay station 2. In one example, the base station 3 is an apparatus that receives signals such as audio signals, video signals, and control signals from the communication apparatus 4, and transmits signals to the communication apparatus 4 via the relay station 2. In one example, the base station 3 is disposed on the ground. The communication apparatus 4 is an apparatus capable of wirelessly communicating with the base station 3 via the relay station 2 in an environment in which radio waves are periodically blocked. The communication apparatus 4 is, in one example, a communication apparatus provided in a helicopter, an aircraft, a ship, an automobile, etc. that can move. Here, a case where the communication apparatus 4 is provided in an environment in which radio waves are periodically blocked, specifically, a case where the communication apparatus 4 is provided in a helicopter will be described as an example. The relay station 2 and the base station 3 do not have special features in the first embodiment and can be inferred by those skilled in the art, and thus will not be described in detail.

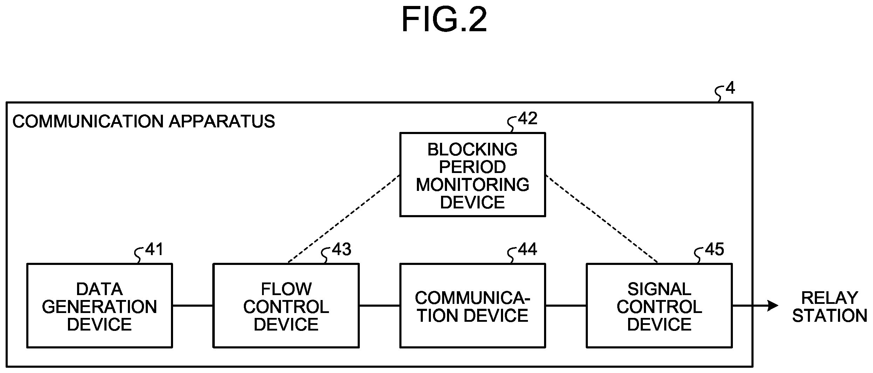

FIG. 2 is a block diagram illustrating an example of a configuration of the communication apparatus according to the first embodiment. The communication apparatus 4 includes a data generation device 41, a blocking period monitoring device 42, a flow control device 43, a communication device 44, and a signal control device 45. Solid lines in the figure represent the flow of data, and dotted lines represent information exchanges for control. The same applies to the subsequent figures.

The data generation device 41 is a device for generating data to be transmitted by the communication apparatus 4. An example of the data generation device 41 is an encoder for video transmission or the like.

The blocking period monitoring device 42 is a device that monitors the state of periodic radio wave interference. Specifically, the blocking period monitoring device 42 monitors the state of periodic blocking of radio waves, that is, a transmission beam, detects a blocked interval that is a time during which radio waves between the communication apparatus 4 and the relay station 2 are blocked, and a passing interval that is a time during which the radio waves are not blocked, and generates the detection results as blocking period information. Here, since the communication apparatus 4 is applied to a helicopter, the blocking period monitoring device 42 is a device that monitors the state of the rotor blades of the helicopter. The blocking period monitoring device 42 is synchronized with the rotation period of the rotor blades, and detects passing intervals and blocked intervals for a passing point of radio waves transmitted and received by the communication apparatus 4. The blocking period monitoring device 42 notifies the flow control device 43 and the signal control device 45 of the detection results as the blocking period information. The blocking period information is information indicating whether the environment is a passing interval or a blocked interval.

The flow control device 43 is a device that controls the transmission of data from the data generation device 41 without blockage in an environment in which radio waves are periodically blocked. Using the blocking period information, the flow control device 43 generates discontinuous data into which data is divided discontinuously so as not to be transmitted in blocked intervals but to be transmitted in passing intervals, adjusts the transmission timing of the discontinuous data, and outputs the discontinuous data to the communication device 44. At this time, the flow control device 43 divides data generated by the data generation device 41 into pieces of a length equal to or less than a length transmittable in a passing interval. That is, the flow control device 43 converts the data into discontinuous data. Hereinafter, data generated by the data generation device 41 is also referred to as continuous data, and data discontinuously converted by the flow control device 43 is also referred to as discontinuous data.

The communication device 44 is a device that transmits and receives data to and from the base station 3 via the relay station 2. The communication device 44 transmits data generated by the data generation device 41 and converted by the flow control device 43, and a control signal generated by the communication device 44 to the base station 3 in a format according to a predetermined protocol. The control signal is, in one example, a signal generated by the communication device 44 and used for communication with the base station 3. The control signal is generated at an arbitrary timing and thus may be generated in a blocked interval or in a passing interval. An example of the communication device 44 is a common communication modem without a function to compensate for periodic radio wave interference, here, radio wave blocking.

The signal control device 45 controls the passage or interruption of a transmission signal including a control signal from the communication device 44 in an environment in which radio waves are periodically blocked. The signal control device 45 performs control to duplicate a control signal generated by the communication device 44 in a blocked interval, and transmit, in a passing interval, a delayed control signal obtained by providing a delay time to a duplicate control signal. Specifically, when it is a passing interval, the signal control device 45 passes a transmission signal including data and a control signal from the communication device 44 to transmit the transmission signal as a transmission beam from the communication apparatus 4 to the relay station 2. When it is a blocked interval, the signal control device 45 duplicates a control signal from the communication device 44, interrupts a transmission signal including the duplication source control signal, generates a delayed control signal by providing a delay time to a duplicate control signal, and transmits the delayed control signal in a passing interval.

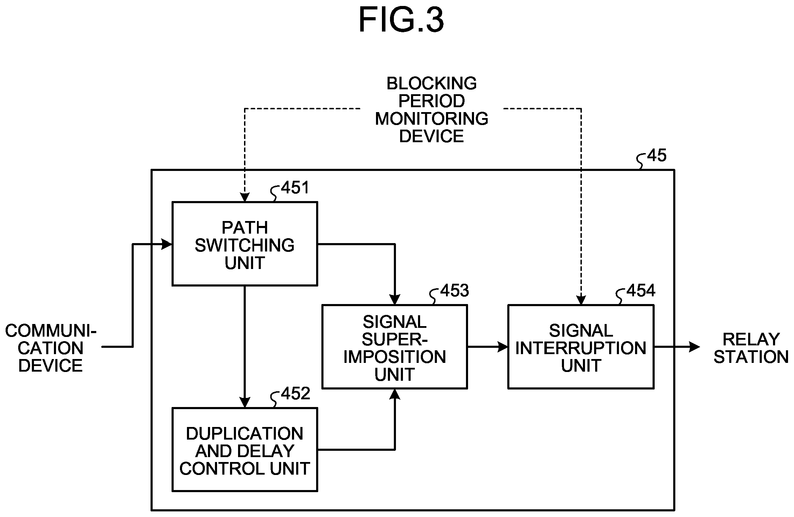

FIG. 3 is a block diagram illustrating an example of a configuration of the signal control device used in the communication apparatus according to the first embodiment. The signal control device 45 includes a path switching unit 451, a duplication and delay control unit 452, a signal superimposition unit 453, and a signal interruption unit 454.

The path switching unit 451 switches signal transmission paths depending on the state of the rotor blades, based on the blocking period information. That is, using the blocking period information, the path switching unit 451 outputs a control signal to the duplication and delay control unit 452 when it is a blocked interval, and outputs a control signal to the signal superimposition unit 453 when it is a passing interval. Specifically, since discontinuous data from the flow control device 43 is controlled so as to be transmitted in a passing interval and not to be transmitted in a blocked interval, the path switching unit 451 outputs the discontinuous data to the signal superimposition unit 453. When receiving a control signal generated in a passing interval, the path switching unit 451 also outputs the control signal to the signal superimposition unit 453. On the other hand, when receiving a control signal in a blocked interval, the flow control device 43 outputs the control signal to the duplication and delay control unit 452.

The duplication and delay control unit 452 duplicates a control signal and outputs the control signal or a delayed control signal to the signal superimposition unit 453. Specifically, the duplication and delay control unit 452 duplicates a control signal generated by the communication device 44 in a blocked interval, and provides a delay time to a duplicate control signal to generate a delayed control signal. The delay time to be provided may be a predetermined amount. The delay time may be one of a plurality of delay times. That is, the duplication and delay control unit 452 may make the same number of delayed duplicate signals as the number of delay times, and provide different delay times to different delayed duplicate signals. It is desirable that the delay times be selected so that one of the delayed control signals be transmitted in a passing interval. The duplication and delay control unit 452 outputs the duplication source control signal and the delayed control signal to the signal superimposition unit 453.

The signal superimposition unit 453 superimposes discontinuous data whose transmission timing has been adjusted so as to be transmitted in a passing interval by the flow control device 43, and a control signal or a delayed control signal to generate a transmission signal, and outputs the transmission signal to the signal interruption unit 454. When it is a passing interval, the signal superimposition unit 453 superimposes discontinuous data from the flow control device 43 and a control signal or a delayed control signal, and outputs a transmission signal. The control signal at this time is generated in the passing interval. When it is a blocked interval, the signal superimposition unit 453 outputs, as a transmission signal, a duplication source control signal generated in the blocked interval or a delayed control signal obtained by duplicating a control signal generated in a blocked interval. In one example, the signal superimposition unit 453 superimposes discontinuous data and a control signal or a delayed control signal as signals of different frequency channels, to generate a transmission signal.

The signal interruption unit 454 interrupts a transmission signal output from the signal superimposition unit 453 when it is a blocked interval, using the blocking period information, that is, depending on the state of the rotor blades from the blocking period information. As a result, a transmission beam is not output to the outside of the signal control device 45. When it is a passing interval, the signal interruption unit 454 passes a transmission signal output from the signal superimposition unit 453. That is, a transmission beam is transmitted from the communication apparatus 4 to the relay station 2.

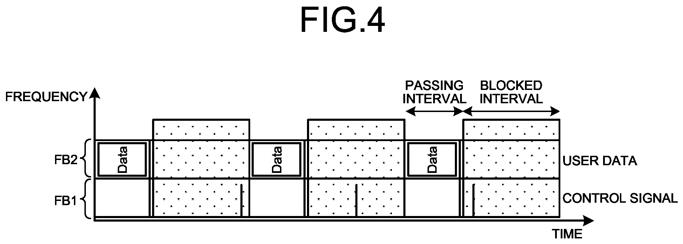

FIG. 4 is a diagram schematically illustrating an example of a signal transmitted from the communication device. In the figure, the horizontal axis represents time, and the vertical axis represents frequency. FIG. 4 illustrates a communication scheme in which a frequency for transmitting data and a frequency for transmitting control signals are different. That is, a first frequency channel FB1 is used for transmission of control signals, and a second frequency channel FB2 is used for transmission of data generated by the data generation device 41. Data generated by the data generation device 41 is also referred to as user data. In the figure, blocked intervals are hatched, and passing intervals are not hatched. User data generated by the data generation device 41 is controlled by the flow control device 43 to be transmitted in passing intervals, and thus is not transmitted during blocked intervals by the communication device 44. On the other hand, control signals generated by the communication device 44 are generated in a stage subsequent to the flow control device 43 as illustrated in FIG. 2, and thus can be generated in blocked intervals. In the example of FIG. 4, a case where all control signals are generated in blocked intervals is illustrated.

In the first embodiment, the signal control device 45 makes discontinuous data in a passing interval a transmission signal and transmits the transmission signal as it is, and makes a control signal generated in a blocked interval a transmission signal but interrupts the transmission signal. The signal control device 45 duplicates a control signal generated in a blocked interval and delays a duplicate control signal so that the delayed control signal is transmitted in a passing interval. A detailed method of this will be described.

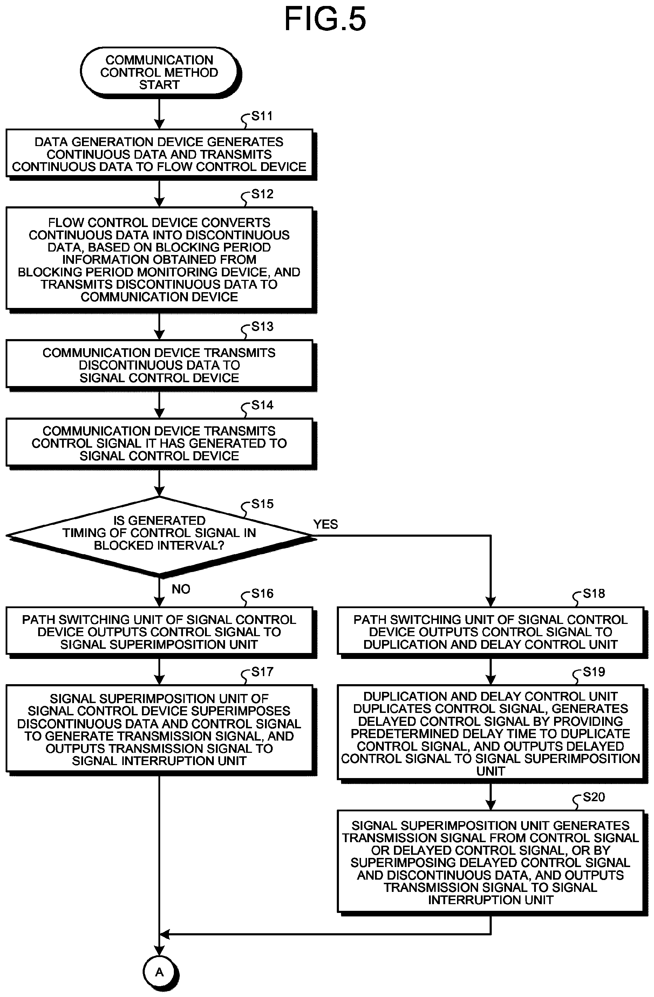

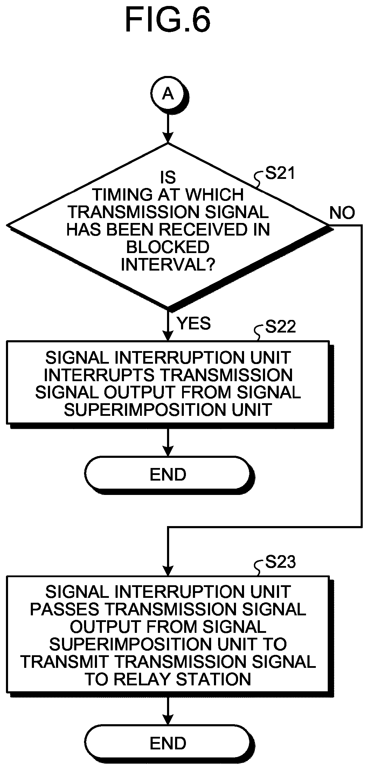

FIGS. 5 and 6 are flowcharts illustrating an example of a procedure of a communication control method in the communication apparatus according to the first embodiment. Here, it is assumed that the blocking period monitoring device 42 has monitored periods at which radio waves are blocked by the rotor blades of the helicopter, and the blocking period information has been generated.

First, the data generation device 41 generates continuous data and transmits the continuous data to the flow control device 43 (step S11). Next, the flow control device 43 converts the received continuous data into discontinuous data, based on the blocking period information obtained from the blocking period monitoring device 42 so that the continuous data is not blocked by the rotor blades, and transmits the discontinuous data to the communication device 44 (step S12). Here, the continuous data is sequentially divided to a size equal to or smaller than the amount of data that can be transmitted during a passing interval obtained from the blocking period information. That is, the continuous data is converted into the discontinuous data.

After that, the communication device 44 transmits the received discontinuous data to the signal control device 45 (step S13). At this time, the path switching unit 451 of the signal control device 45 outputs the received discontinuous data to the signal superimposition unit 453, based on the blocking period information.

The communication device 44 transmits a control signal it has generated to the signal control device 45 (step S14). The communication device 44 can generate the control signal by itself, but the timing of generating the control signal depends on the state of the communication device 44. Consequently, the transmission timing of the control signal may or may not coincide with that of the discontinuous data.

The path switching unit 451 of the signal control device 45 determines whether the generated timing of the control signal is in a blocked interval, based on the blocking period information (step S15). Since the time required for transmission from the communication device 44 to the signal control device 45 is very short, the generated timing of the control signal may be regarded as the timing at which the signal control device 45 has received the control signal. The following process is a signal control method performed by the signal control device 45. When the generated timing of the control signal is not in a blocked interval (No in step S15), that is, when the generated timing is in a passing interval, the path switching unit 451 outputs the control signal to the signal superimposition unit 453 (step S16). The signal superimposition unit 453 superimposes the discontinuous data and the control signal to generate a transmission signal, and outputs the transmission signal to the signal interruption unit 454 (step S17).

On the other hand, when the generated timing of the control signal is in a blocked interval (Yes in step S15), the path switching unit 451 of the signal control device 45 outputs the control signal to the duplication and delay control unit 452 (step S18). The duplication and delay control unit 452 duplicates the control signal, generates a delayed control signal by providing a predetermined delay time to a duplicate control signal, and outputs the delayed control signal to the signal superimposition unit 453 (step S19). In a case where there is a plurality of delay times to be provided, the duplication and delay control unit 452 generates delayed control signals to which the respective delay times are provided, and outputs the delayed control signals to the signal superimposition unit 453.

After that, the signal superimposition unit 453 generates a transmission signal from the control signal or the delayed control signal, or by superimposing the delayed control signal and the discontinuous data, and outputs the transmission signal to the signal interruption unit 454 (step S20). When there is no discontinuous data at the time of generating a transmission signal, the signal superimposition unit 453 generates a transmission signal from the control signal or the delayed control signal. The control signal at this time has been generated by the communication device 44 in the blocked interval. The delayed control signal at this time has been output to the signal superimposition unit 453 in a blocked interval. When there is discontinuous data at the time of generating a transmission signal, the signal superimposition unit 453 generates a transmission signal by superimposing the delayed control signal and the discontinuous data. The delayed control signal at this time has been output to the signal superimposition unit 453 in the passing interval.

After step S17 or S20, the signal interruption unit 454 determines whether the timing at which the transmission signal has been received is in a blocked interval by referring to the blocking period information (step S21). When the timing at which the transmission signal has been received is in a blocked interval (Yes in step S21), the signal interruption unit 454 interrupts the transmission signal output from the signal superimposition unit 453 (step S22). The transmission signal output in the blocked interval is the control signal generated in the blocked interval or part of the delayed control signal. The interruption of the transmission signal prevents the transmission signal from being output as a transmission beam from the signal control device 45 during the blocked interval. Furthermore, since no transmission beam is output from the signal control device 45, it is possible to prevent a transmission beam from being reflected off the rotor blades and affecting the ground as an interference wave during the blocked interval. Then, the process is completed.

When the timing is not in a blocked interval (No in step S21), that is, when the timing is in a passing interval, the signal interruption unit 454 passes the transmission signal output from the signal superimposition unit 453 to transmit the transmission signal to the relay station 2 (step S23). That is, the transmission signal is transmitted to the relay station 2 as a transmission beam. Then, the process is completed.

As described above, the signal control device 45 does not need to perform processing on discontinuous data in a passing interval, but duplicates a control signal transmitted in a blocked interval and provides a delay to a duplicate control signal. Therefore, the path switching unit 451 switches signal output destinations between a blocked interval and a passing interval.

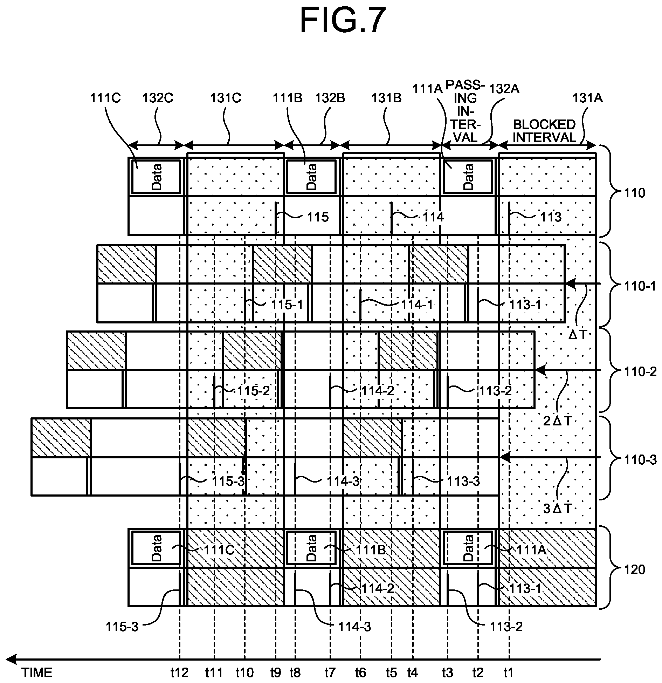

Here, the generation of a delayed control signal in step S19 and the generation of a transmission signal in step S20 will be described. FIG. 7 is a diagram schematically illustrating an example of transmission signal generation processing in the signal control device according to the first embodiment. Here, how a transmission signal is generated by the signal superimposition unit 453 of the signal control device 45 is illustrated. An original signal 110 including discontinuous data and control signals input to the signal control device 45, three delayed signals 110-1, 110-2, and 110-3 obtained by providing different delay times to the control signals of the original signal 110, and a transmission signal 120 obtained by superimposing the discontinuous data and the control signals or the delayed control signals are illustrated.

It is assumed that continuous data of the original signal 110 is divided into three pieces of discontinuous data 111A, 111B, and 111C in accordance with passing intervals 132A, 132B, and 132C. The original signal 110 includes a control signal 113 generated in a blocked interval 131A, a control signal 114 generated in a blocked interval 131B, and a control signal 115 generated in a blocked interval 131C. In the delayed signals 110-1, 110-2, and 110-3, which do not include the pieces of discontinuous data 111A, 111B, and 111C, the positions of the pieces of discontinuous data 111A, 111B, and 111C are also illustrated to facilitate the understanding of the provision of delays.

The original signal 110 includes the pieces of discontinuous data 111A, 111B, and 111C to be transmitted in the passing intervals 132A, 132B, and 132C, respectively, and the control signals 113, 114, and 115 generated by the communication device 44 in the blocked intervals 131A, 131B, and 131C, respectively.

The control signal 113 is input to the signal control device 45 in the blocked interval 131A. In the signal control device 45, the control signal 113 is output from the path switching unit 451 to the duplication and delay control unit 452. The duplication and delay control unit 452 duplicates the control signal 113. At this time, the duplication and delay control unit 452 makes three duplicates of the control signal 113. The duplication and delay control unit 452 outputs the duplication source control signal 113 to the signal superimposition unit 453 at time t1. The signal superimposition unit 453 generates a transmission signal from the control signal 113 and outputs the transmission signal. However, since the control signal 113 is a signal generated in the blocked interval 131A, the transmission thereof is interrupted by the signal interruption unit 454. That is, nothing is output as the transmission signal 120.

The duplication and delay control unit 452 provides predetermined delay times to individual duplicate control signals. Here, the duplication and delay control unit 452 provides delays of ΔT, 2ΔT, and 3ΔT to the duplicate control signals. Here, ΔT is 1/3 of the time of the blocked intervals 131A, 131B, and 131C, and is equal to the time of the passing intervals 132A, 132B, and 132C. When the duplication and delay control unit 452 provides a delay time of ΔT, the duplication and delay control unit 452 outputs a delayed control signal 113-1 to the signal superimposition unit 453 at time t2. Likewise, when the duplication and delay control unit 452 provides delay times of 2ΔT and 3ΔT, the duplication and delay control unit 452 outputs delayed control signals 113-2 and 113-3 to the signal superimposition unit 453 at times t3 and t4, respectively. Times t2 and t3 are in the passing interval 132A, and time t4 is in the blocked interval 131B.

When the passing interval 132A has come, the path switching unit 451 outputs the discontinuous data 111A from the communication device 44 to the signal superimposition unit 453. The signal superimposition unit 453 superimposes the discontinuous data 111A and the delayed control signals 113-1 and 113-2 present in the passing interval 132A to generate the transmission signal 120, and outputs the transmission signal 120 to the signal interruption unit 454. The signal interruption unit 454 refers to the blocking period information, and passes the transmission signal 120 since it is the passing interval 132A. Consequently, the transmission signal 120 including the discontinuous data 111A and the delayed control signals 113-1 and 113-2 is transmitted.

After that, at time t4 in the blocked interval 131B, the delayed control signal 113-3 is input to the signal superimposition unit 453. The signal superimposition unit 453 generates a transmission signal from the delayed control signal 113-3 and outputs the transmission signal. However, since it is the blocked interval 131B, the transmission signal is interrupted by the signal interruption unit 454.

Further, the control signal 114 is input to the signal control device 45 in the blocked interval 131B. Like the control signal 113 described above, the control signal 114 is duplicated, and the duplication source control signal 114 is input to the signal superimposition unit 453 at time t5. Duplicate control signals are provided with the delay times of ΔT, 2ΔT, and 3ΔT to be delayed control signals 114-1, 114-2, and 114-3, respectively. The delayed control signals 114-1, 114-2, and 114-3 are output to the signal superimposition unit 453 at times t6, t7, and t8, respectively. Time t6 is in the blocked interval 131B, and times t7 and t8 are in the passing interval 132B. The signal superimposition unit 453 generates a transmission signal from the delayed control signal 114-1 input in the blocked interval 131B and outputs the transmission signal. However, since it is the blocked interval 131B, the signal interruption unit 454 interrupts the transmission signal.

When the passing interval 132B has come, the path switching unit 451 outputs the discontinuous data 111B from the communication device 44 to the signal superimposition unit 453. The signal superimposition unit 453 superimposes the discontinuous data 111B and the delayed control signals 114-2 and 114-3 present in the passing interval 132B to generate the transmission signal 120, and outputs the transmission signal 120 to the signal interruption unit 454. The signal interruption unit 454 refers to the blocking period information, and passes the transmission signal 120 since it is the passing interval 132B. Consequently, the transmission signal 120 including the discontinuous data 111B and the delayed control signals 114-2 and 114-3 is transmitted.

Furthermore, the control signal 115 is input to the signal control device 45 in the blocked interval 131C. Like the control signal 113 described above, the control signal 115 is duplicated, and the duplication source control signal 115 is input to the signal superimposition unit 453 at time t9. Duplicate control signals are provided with the delay times of ΔT, 2ΔT, and 3ΔT to be delayed control signals 115-1, 115-2, and 115-3, respectively. The delayed control signals 115-1, 115-2, and 115-3 are output to the signal superimposition unit 453 at times t10, t11, and t12, respectively. Times t10 and t11 are in the blocked interval 131C, and time t12 is in the passing interval 132C. The signal superimposition unit 453 generates transmission signals from the delayed control signals 115-1 and 115-2 input in the blocked interval 131C and outputs the transmission signals. However, since it is the blocked interval 131C, the signal interruption unit 454 interrupts the transmission signals.

When the passing interval 132C has come, the path switching unit 451 outputs the discontinuous data 111C from the communication device 44 to the signal superimposition unit 453. The signal superimposition unit 453 superimposes the discontinuous data 111C and the delayed control signal 115-3 present in the passing interval 132C to generate the transmission signal 120, and outputs the transmission signal 120 to the signal interruption unit 454. The signal interruption unit 454 refers to the blocking period information, and passes the transmission signal 120 since it is the passing interval 132C. Consequently, the transmission signal 120 including the discontinuous data 111C and the delayed control signal 115-3 is transmitted.

By duplicating the control signals 113, 114, and 115 generated in the blocked intervals 131A, 131B, and 131C as described above, signals can be transmitted without overlapping each other on the same frequency. This allows the reception side to perform communication without removing delayed signals.

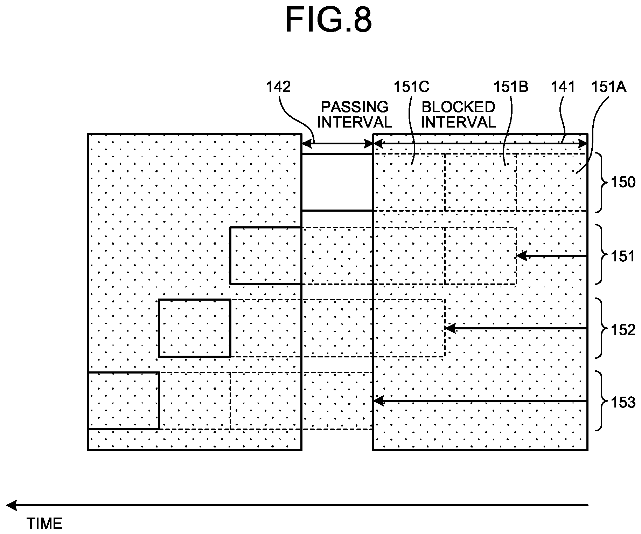

FIG. 8 is a diagram illustrating an example of a delay time setting method. In the figure, the horizontal axis represents time. The length of a blocked interval 141 is three times the length of a passing interval 142. Here, a signal 150 to be delayed has a length equal to the sum of those of the blocked interval 141 and the passing interval 142.

As illustrated in FIG. 8, a delayed signal 151 is obtained by providing the signal 150 with a delay of 1/3 the amount of the blocked interval 141, a delayed signal 152 is obtained by providing the signal 150 with a delay of 2/3 the amount of the blocked interval 141, and a delayed signal 153 is obtained by providing the signal 150 with a delay of 3/3 the amount of the blocked interval 141. In this case, every control signal generated in the blocked interval 141 caused by the rotor blades can be moved to the passing interval 142 by one of the delayed signals 151, 152, and 153. In one example, when a control signal is present in an area corresponding to a portion 151A of the signal 150, the control signal can be moved to the passing interval 142 by the delayed signal 153 of FIG. 8. When a control signal is present in an area corresponding to a portion 151B of the signal 150, the control signal can be moved to the passing interval 142 by the delayed signal 152 of FIG. 8. When a control signal is present in a portion 151C of the signal 150, the control signal can be moved to the passing interval 142 by the delayed signal 151 of FIG. 8.

When the length of the passing interval 142 is ΔT, the length of the blocked interval is 3ΔT. By generating the delayed signals 151, 152, and 153 with delay times of ΔT, 2ΔT, and 3ΔT, the control signals generated in the blocked interval 141 can be moved to the passing interval 142. By setting delay times in this way, blocking at a blocking rate of up to 75% can be handled.

The above description has shown the case where the communication apparatus 4 transmits a transmission signal. When the communication apparatus 4 receives a transmission signal, the effects of blocked intervals can be prevented in like manner.

As described above, in addition to the flow control to transmit data while avoiding blocked intervals, the communication apparatus 4 according to the first embodiment duplicates a control signal and generates a delayed control signal by providing a delay time to a duplicate control signal. Consequently, a control signal generated in a blocked interval is moved to a passing interval and transmitted. This results in the effect that desired data can be reliably transmitted and received without being blocked by the rotor blades even under circumstances where radio waves are blocked by the rotor blades. Furthermore, the communication apparatus 4 according to the first embodiment interrupts transmission signals generated from a control signal generated in a blocked interval and a delayed control signal output to the signal superimposition unit 453 in a blocked interval, to prevent the transmission signals from being output to the outside of the communication apparatus 4. This prevents the generation of an interference wave to the ground due to the reflection off the rotor blades of a transmission signal including a control signal output in a blocked interval. That is, this also has the effect of being able to prevent an interference wave reflected off the rotor blades to the ground and having an effect.

### Second Embodiment.

A second embodiment describes a method in which a control signal generated in a blocked interval is not provided with a fixed delay, but the control signal is stored until a passing interval comes, and the control signal is transmitted when the passing interval has come. The first embodiment has illustrated the communication system 1 in which discontinuous data and a control signal are transmitted at different frequencies. The second embodiment describes the communication system 1 in which discontinuous data and a control signal are transmitted at the same frequency as an example.

Configurations of the communication system 1 and the communication apparatus 4 according to the second embodiment are similar to those described in the first embodiment. However, a configuration of the signal control device 45 of the communication apparatus 4 in the second embodiment is different from that of the first embodiment. Hereinafter, the same components as those of the first embodiment are assigned the same reference numerals and will not be described, and different portions will be described.

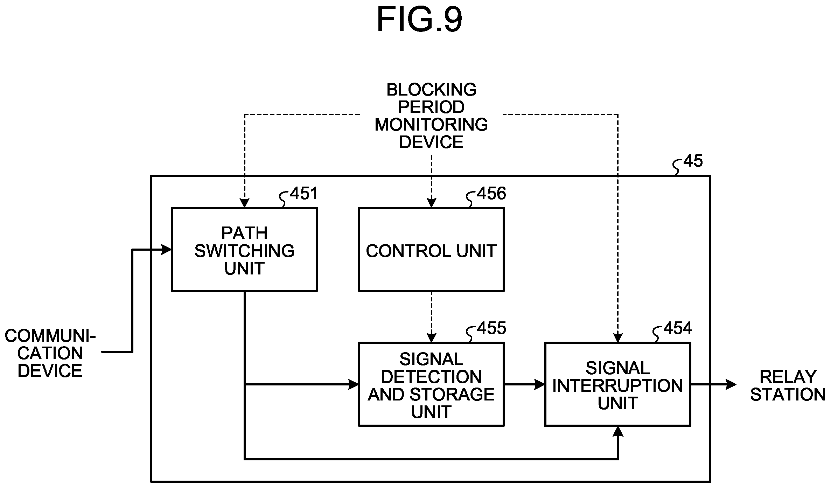

FIG. 9 is a block diagram illustrating an example of a configuration of the signal control device used in the communication apparatus according to the second embodiment. The signal control device 45 includes the path switching unit 451, a signal detection and storage unit 455, a control unit 456, and the signal interruption unit 454. In the second embodiment, in which, unlike in the first embodiment, a control signal is not provided with a fixed delay as described above, it is necessary to detect and store a control signal at the timing when the control signal is transmitted. Therefore, the second embodiment includes the signal detection and storage unit 455 instead of the duplication and delay control unit 452. That is, the signal detection and storage unit 455 monitors a signal during a blocked interval, duplicates a control signal when detecting the control signal, and stores a duplicate control signal.

Specifically, when the present time is in a blocked interval based on the blocking period information, the path switching unit 451 outputs an input signal to a path to the signal detection and storage unit 455. The signal detection and storage unit 455 monitors a signal, that is, a control signal flowing through the path. When detecting a control signal, the signal detection and storage unit 455 duplicates the control signal, stores a duplicate control signal, and outputs the duplication source control signal to the signal interruption unit 454. The duplication source control signal output to the signal interruption unit 454 is made to be a transmission signal, but is interrupted by the signal interruption unit 454 since it is the blocked interval. The signal detection and storage unit 455 outputs the duplicate control signal to the signal interruption unit 454 in accordance with a transmission instruction from the control unit 456. The duplicate control signal is stored in the signal detection and storage unit 455 and output in accordance with the transmission instruction from the control unit 456, and thus can be referred to as a delayed control signal. When the present time is in a passing interval based on the blocking period information, the path switching unit 451 outputs an input signal to a path to the signal interruption unit 454.

Based on the blocking period information from the blocking period monitoring device 42, the control unit 456 outputs a transmission instruction to the signal detection and storage unit 455 at the timing of change from a blocked interval to a passing interval. A delayed control signal is output from the signal detection and storage unit 455 to the signal interruption unit 454 according to a transmission instruction from the control unit 456.

The signal interruption unit 454 disposes discontinuous data and a control signal or a delayed control signal input in predetermined slots to generate and transmit a transmission signal. Based on the blocking period information, the signal interruption unit 454 interrupts a transmission signal when the present time is in a blocked interval, and passes a transmission signal when the present time is in a passing interval to transmit a transmission beam to the relay station 2.

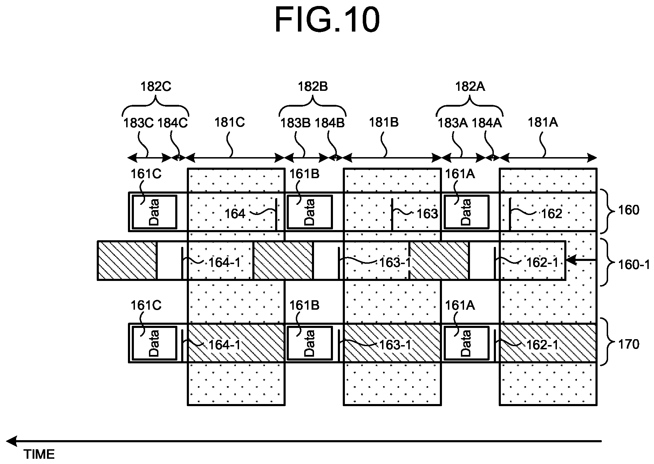

FIG. 10 is a diagram schematically illustrating an example of transmission signal generation processing in the communication apparatus according to the second embodiment. FIG. 10 illustrates the relationships among an original signal 160, a delayed signal 160-1, and a transmission signal 170 in the second embodiment. Here, how the transmission signal 170 is output from the signal interruption unit 454 of the signal control device 45 is illustrated. The original signal 160 including pieces of discontinuous data 161A, 161B, and 161C and control signals 162, 163, and 164 input to the signal control device 45, the delayed signal 160-1 including delayed control signals 162-1, 163-1, and 164-1 obtained by delaying duplicates of the control signals 162, 163, and 164, and the transmission signal 170 including the pieces of discontinuous data 161A, 161B, and 161C and the delayed control signals 162-1, 163-1, and 164-1 are illustrated.

In the first embodiment, the flow control device 43 disposes discontinuous data only in passing intervals to prevent the transmission of continuous data in blocked intervals. In the first embodiment, since the frequency channel for transmitting discontinuous data is different from the frequency channel for transmitting control signals, continuous data is divided into pieces of discontinuous data to have a size transmittable in a passing interval. However, in the second embodiment, the pieces of discontinuous data 161A, 161B, and 161C and the control signals 162, 163, and 164 or the delayed control signals 162-1, 162-2, and 162-3 are transmitted on the same frequency channel. Therefore, the pieces of discontinuous data 161A, 161B, and 161C are disposed, leaving times to transmit the control signals or the delayed control signals 162-1, 163-1, and 164-1 in the passing intervals 182A, 182B, and 182C. That is, in the second embodiment, the passing intervals 182A, 182B, and 182C include first time slots 183A, 183B, and 183C that are times to transmit the pieces of discontinuous data 161A, 161B, and 161C, and second time slots 184A, 184B, and 184C that are times to transmit the control signals 162, 163, and 164 or the delayed control signals 162-1, 163-1, and 164-1.

It is assumed that continuous data of the original signal 160 is divided into three pieces of discontinuous data 161A, 161B, and 161C in accordance with the passing intervals 182A, 182B, and 182C. The original signal 160 includes the control signals 162, 163, and 164 generated in blocked intervals 181A, 181B, and 181C.

The control signal 162 from the communication device 44 is input to the signal control device 45 in the blocked interval 181A. Since the control signal 162 is input in the blocked interval 181A, the control signal 162 is output from the path switching unit 451 to the signal detection and storage unit 455 in the signal control device 45. The signal detection and storage unit 455 duplicates the control signal 162 and stores a duplicate. The signal detection and storage unit 455 outputs the duplication source control signal 162 to the signal interruption unit 454. The signal interruption unit 454 disposes the received control signal 162 in a second time slot of a transmission signal. However, the signal interruption unit 454 interrupts the transmission of the transmission signal, referring to the blocking period information, since the current environment is the blocked interval 181A. That is, the transmission signal 170 is not output.

When the passing interval 182A has come, the path switching unit 451 outputs the discontinuous data 161A from the communication device 44 to the signal interruption unit 454. The control unit 456 refers to the blocking period information and outputs a transmission instruction to the signal detection and storage unit 455 at the timing of change from the blocked interval 181A to the passing interval 182A. When receiving the transmission instruction from the control unit 456, the signal detection and storage unit 455 outputs the stored control signal 162 to the signal interruption unit 454 as the delayed control signal 162-1. The signal interruption unit 454 disposes the discontinuous data 161A in the first time slot 183A in the transmission signal 170, and disposes the delayed control signal 162-1 in the second time slot 184A in the transmission signal 170. The signal interruption unit 454 refers to the blocking period information and passes the transmission signal 170 since the current environment is the passing interval 182A.

For the control signals 163 and 164, the signal detection and storage unit 455 likewise receives transmission instructions from the control unit 456 and outputs the delayed control signals 163-1 and 164-1 to the signal interruption unit 454 in the passing intervals 182B and 182C, respectively. The signal interruption unit 454 disposes the pieces of discontinuous data 161B and 161C in the first time slots 183B and 183C in the transmission signal 170, and disposes the delayed control signals 163-1 and 164-1 in the second time slots 184B and 184C in the transmission signal 170. The signal interruption unit 454 refers to the blocking period information and passes the transmission signals 170 since the current environments are the passing intervals 182B and 182C.

This control allows the transmission of the pieces of discontinuous data 161A, 161B, and 161C and the control signals 162, 163, and 164 or the delayed control signals 162-1, 163-1, and 164-1 without signal overlapping, even when the pieces of discontinuous data 161A, 161B, and 161C and the control signals 162, 163, and 164 or the delayed control signals 162-1, 163-1, and 164-1 are transmitted on the same frequency channel. As described above, the second embodiment eliminates the need to superimpose the pieces of discontinuous data 161A, 161B, and 161C and the control signals 162, 163, and 164 or the delayed control signals 162-1, 163-1, and 164-1, and thus eliminates the need to provide the signal superimposition unit 453 as described in the first embodiment. In the second embodiment, a delay provided to a control signal is not fixed unlike in the first embodiment, and dynamically changes depending on the timing at which the control signal has been generated during a blocked interval.

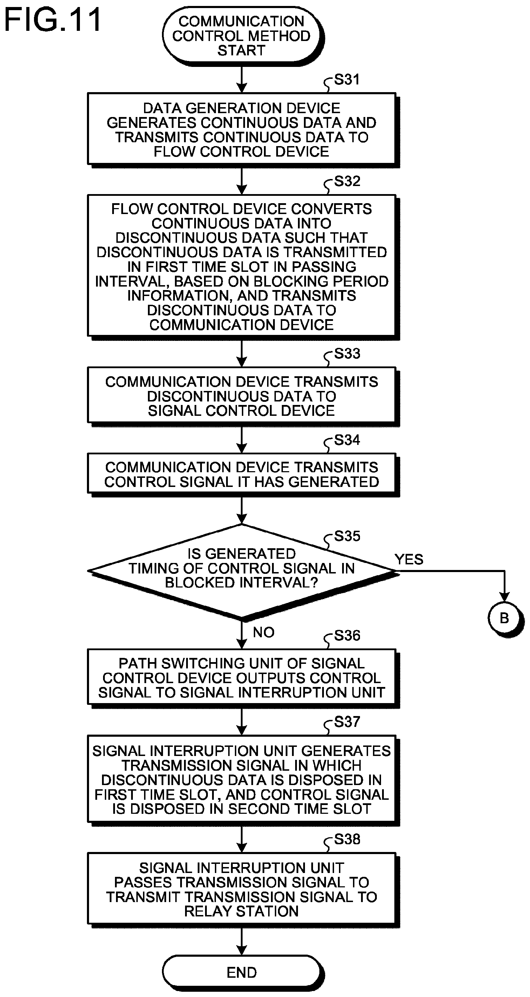

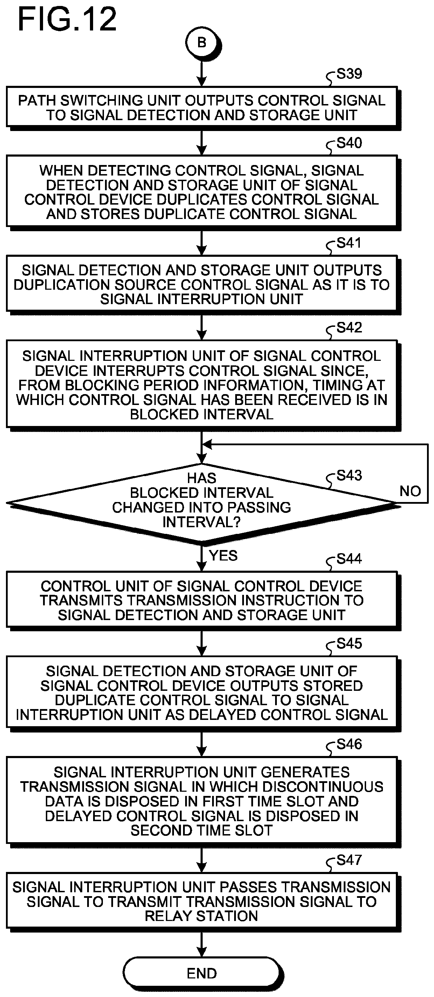

FIGS. 11 and 12 are flowcharts illustrating an example of a procedure of a communication control method in the communication apparatus according to the second embodiment. Here, it is assumed that the blocking period monitoring device 42 has monitored periods at which radio waves are blocked by the rotor blades of the helicopter, and the blocking period information has been generated.

First, the data generation device 41 generates continuous data and transmits the continuous data to the flow control device 43 (step S31). Next, the flow control device 43 converts the received continuous data into discontinuous data such that the discontinuous data is transmitted in a first time slot in a passing interval, based on the blocking period information obtained from the blocking period monitoring device 42 so that the continuous data is not blocked by the rotor blades, and transmits the discontinuous data to the communication device 44 (step S32). The first time slot is an interval except a second time slot for control signal transmission in the passing interval.

After that, the communication device 44 transmits the received discontinuous data to the signal control device 45 (step S33). At this time, the path switching unit 451 of the signal control device 45 outputs the received discontinuous data to the signal interruption unit 454, based on the blocking period information. That is, the discontinuous data is input to the signal control device 45 at the timing when the path switching unit 451 has switched to the signal interruption unit 454.

The communication device 44 transmits a control signal it has generated (step S34). The communication device 44 can generate the control signal by itself, but the timing of generating the control signal depends on the state of the communication device 44. Consequently, the transmission timing of the control signal may or may not coincide with that of the discontinuous data.

The path switching unit 451 of the signal control device 45 determines whether the generated timing of the control signal is in a blocked interval, based on the blocking period information (step S35). Since the time required for transmission from the communication device 44 to the signal control device 45 is very short, the generated timing of the control signal may be regarded as the timing at which the signal control device 45 has received the control signal. The following process is a signal control method performed by the signal control device 45. When the generated timing of the control signal is not in a blocked interval (No in step S35), that is, when the generated timing is in a passing interval, the path switching unit 451 outputs the control signal to the signal interruption unit 454 (step S36). The signal interruption unit 454 generates a transmission signal in which the discontinuous data is disposed in a first time slot, and the control signal is disposed in a second time slot (step S37). The signal interruption unit 454 refers to the blocking period information, and passes the transmission signal to transmit the transmission signal to the relay station 2 since the timing at which the transmission signal has been received is in the passing interval (step S38). Then, the process is completed.

On the other hand, when the generated timing of the control signal is in a blocked interval (Yes in step S35), the path switching unit 451 outputs the control signal to the signal detection and storage unit 455 (step S39). When detecting the control signal, the signal detection and storage unit 455 duplicates the control signal and stores a duplicate control signal (step S40). The signal detection and storage unit 455 outputs the duplication source control signal as it is to the signal interruption unit 454 (step S41). The signal interruption unit 454 interrupts the control signal since, from the blocking period information, the timing at which the control signal has been received is in the blocked interval (step S42). Consequently, the control signal is not output from the signal control device 45 during the blocked interval. Furthermore, since the control signal is not output from the signal control device 45 during the blocked interval, it is possible to prevent the control signal from being reflected off the rotor blades and affecting the ground as an interference wave.

After that, the control unit 456 of the signal control device 45 determines whether the blocked interval has changed into a passing interval, based on the blocking period information (step S43). When the blocked interval has not changed into a passing interval (No in step S43), the process enters a wait state. When the blocked interval has changed into a passing interval (Yes in step S43), the control unit 456 transmits a transmission instruction to the signal detection and storage unit 455 (step S44). When receiving the transmission instruction from the control unit 456, the signal detection and storage unit 455 outputs the stored duplicate control signal to the signal interruption unit 454 as a delayed control signal (step S45). The signal interruption unit 454 generates a transmission signal in which the discontinuous data is disposed in a first time slot and the delayed control signal is disposed in a second time slot (step S46). The signal interruption unit 454 refers to the blocking period information, and passes the transmission signal to transmit the transmission signal to the relay station 2 since the timing at which the transmission signal has been received is in the passing interval (step S47). Then, the process is completed.

As described above, the communication apparatus 4 according to the second embodiment transmits discontinuous data and a control signal or a delayed control signal on the same frequency channel by providing a first time slot in which to dispose the discontinuous data and a second time slot in which to dispose the control signal or the delayed control signal in a passing interval without blockage by the rotor blades in the flow control device 43. Even in this case, it is possible to transmit a transmission signal to the base station 3 while avoiding blockage by the rotor blades without overlapping of discontinuous data with a control signal or a delayed control signal. This has the effect that desired data can be reliably transmitted and received even in the communication system 1 in which discontinuous data and a control signal or a delayed control signal are transmitted on the same frequency channel and the communication apparatus 4 disposed under circumstances where a signal by radio waves transmitted by the communication apparatus 4 is blocked by the rotor blades.

Here, each device illustrated in FIG. 2 and each processing unit illustrated in FIGS. 3 and 9 may be configured as a single circuit or device, or two or more functional units may be configured as one circuit or device. Each part may be implemented by a control circuit including memory and a processor that executes a program stored in the memory, or may be implemented by dedicated hardware. In one example, the communication apparatus 4 or the signal control device 45 constituting the communication apparatus 4 is implemented by a control circuit.

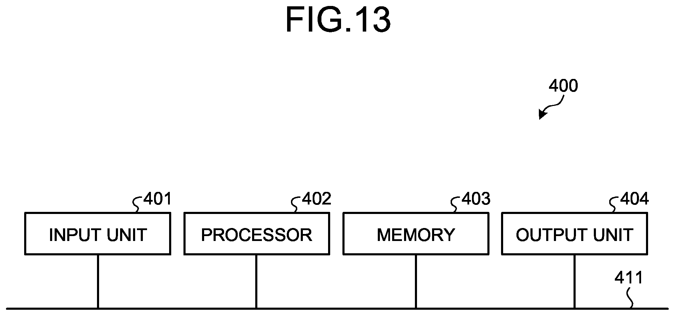

FIG. 13 is a diagram illustrating an example of a hardware configuration of the control circuit. Here, a case where the communication apparatus 4 is configured with a control circuit 400 will be described as an example. The control circuit 400 illustrated in FIG. 13 includes an input unit 401, a processor 402, a memory 403, and an output unit 404. The parts of the control circuit 400 are connected to each other via a bus 411.

The input unit 401 receives a signal from the outside. The output unit 404 outputs a signal generated by the control circuit 400 to the outside. The processor 402 is, for example, a central processing unit (CPU), a central processor, a processing device, an arithmetic device, a microprocessor, a microcomputer, a digital signal processor (DSP), or the like. The processor 402 performs various types of processing.

The memory 403 is, for example, nonvolatile or volatile semiconductor memory such as random-access memory (RAM), read-only memory (ROM), flash memory, an erasable programmable read-only memory (EPROM), or an electrically erasable programmable read-only memory (EEPROM) (registered trademark), or a magnetic disk, a flexible disk, an optical disk, a compact disk, a mini disk, a digital versatile disk (DVD), or the like. The memory 403 stores a program for operating the communication apparatus 4, control period information, etc.

The processor 402 reads the program stored in the memory 403 via the bus 411 and executes the program to perform the processing and control of the entire communication apparatus 4. The functions of the data generation device 41, the blocking period monitoring device 42, the flow control device 43, the communication device 44, and the signal control device 45 illustrated in FIG. 2 are implemented using the processor 402.

The memory 403 is used as a work area of the processor 402. The memory 403 also stores programs such as a boot program, a communication program, and a communication control program to perform the communication control method. When the communication control method described in the first or second embodiment is performed, the processor 402 loads the communication control program into the memory 403 to execute various types of processing.

When the signal control device 45 illustrated in FIGS. 3 and 9 is configured with the control circuit 400, the memory 403 stores a program for operating the signal control device 45 etc. In the case of FIG. 9, the memory 403 stores a duplicate control signal.

The processor 402 reads the program stored in the memory 403 via the bus 411 and executes the program to perform the processing and control of the entire signal control device 45. The functions of the path switching unit 451, the duplication and delay control unit 452, the signal superimposition unit 453, and the signal interruption unit 454 illustrated in FIG. 3, or the functions of the path switching unit 451, the signal detection and storage unit 455, the control unit 456, and the signal interruption unit 454 illustrated in FIG. 9 are implemented using the processor 402.

The memory 403 is used as a work area of the processor 402. The memory 403 also stores programs such as a boot program, a communication program, and a signal control program to perform the signal control method. When the signal control method described in the first or second embodiment is performed, the processor 402 loads the signal control program into the memory 403 to execute various types of processing.

When the communication apparatus 4, the devices including the signal control device 45 constituting the communication apparatus 4, or the processing units constituting the signal control device 45 are implemented by dedicated hardware, the dedicated hardware is, for example, a single circuit, a combined circuit, a programmed processor, a parallel-programmed processor, an application-specific integrated circuit (ASIC), a field-programmable gate array (FPGA), or a combination of them.

Further, by causing a computer to execute the above-described communication control program, the computer has the same functions as the communication apparatus 4.
By causing a computer to execute the above-described signal control program, the computer has the same functions as the signal control device 45.

### Reference Signs List

1 communication system; 2 relay station; 3 base station; 4 communication apparatus; 41 data generation device; 42 blocking period monitoring device; 43 flow control device; 44 communication device; 45 signal control device; 451 path switching unit; 452 duplication and delay control unit; 453 signal superimposition unit; 454 signal interruption unit; 455 signal detection and storage unit; 456 control unit.

## Claims

1. A communication system (1) comprising a communication apparatus (4) capable of wirelessly communicating with a base station (3) via a relay station (2) in an environment in which radio waves are periodically blocked,
the communication apparatus (4) comprising:
- a signal control device (45);
- a flow control device (43) adapted to
discontinuously divide data generated by a data generation device (41) so that the data is not transmitted in a blocked interval that is a periodic time during which the radio waves are blocked, but is transmitted in a passing interval that is a periodic time during which the radio waves are not blocked, and
control transmission of discontinuous data that is the data whose transmission timing is adjusted;
- a communication device (44) without a function to compensate for periodic radio wave interference;
wherein the signal control device (45), to control passage or interruption of a transmission signal including a control signal from the communication device (44), comprises:
a duplication and delay control unit (452) adapted
to duplicate the control signal to be used for communication with the base station (3) generated by the communication device (44) in the blocked interval, and output a delayed control signal obtained by providing a delay time to a duplicate control signal;
a signal superimposition unit (453) adapted to superimpose the discontinuous data and the control signal or the delayed control signal to generate a transmission signal, and output the transmission signal;
a path switching unit (451) adapted to output the control signal to the duplication and delay control unit (452) when the environment is the blocked interval and output the control signal to the signal superimposition unit (453) when the environment is the passing interval, using blocking period information indicating whether the environment is the passing interval or the blocked interval;
a signal interruption unit (454) adapted to interrupt the transmission signal output from the signal superimposition unit (453) when the environment is the blocked interval and pass the transmission signal output from the signal superimposition unit (453) when the environment is the passing interval, using the blocking period information.

2. The communication system (1) according to claim 1, wherein the duplication and delay control unit (452) is adapted to make a plurality of duplicates of the control signal, and to output a plurality of the delayed control signals obtained by providing a different delay time to each of a plurality of duplicate control signals to the signal superimposition unit (453).

3. A communication apparatus (4) capable of wirelessly communicating with a base station (3) via a relay station (2) in an environment in which radio waves are periodically blocked, the communication apparatus (4) comprising:
a blocking period monitoring device (42) adapted to monitor a state of periodic blocking of the radio waves, detect a blocked interval that is a time during which the radio waves are blocked and a passing interval that is a time during which the radio waves are not blocked, and generate detection results as blocking period information;
a flow control device (43) adapted to use the blocking period information, generate discontinuous data by discontinuously dividing the data so that the data is not transmitted in the blocked interval but is transmitted in the passing interval, and adjust a transmission timing of the discontinuous data and output the discontinuous data;
a communication device (44) adapted to transmit the discontinuous data and a control signal to be used to control communication with the base station (3), the communication device (44) being without a function to compensate for periodic radio wave interference; and
a signal control device (45) adapted to control passage or interruption of a transmission signal including the control signal from the communication device (44), wherein the signal control device (45) comprises:
a duplication and delay control unit (452) adapted
to duplicate the control signal to be used for communication with the base station (3) generated by the communication device (44) in the blocked interval, and output a delayed control signal obtained by providing a delay time to a duplicate control signal;
a signal superimposition unit (453) adapted to superimpose the discontinuous data and the control signal or the delayed control signal to generate a transmission signal, and output the transmission signal;
a path switching unit (451) adapted to output the control signal to the duplication and delay control unit (452) when the environment is the blocked interval and output the control signal to the signal superimposition unit (453) when the environment is the passing interval, using blocking period information indicating whether the environment is the passing interval or the blocked interval;
a signal interruption unit (454) adapted to interrupt the transmission signal output from the signal superimposition unit (453) when the environment is the blocked interval, and pass the transmission signal output from the signal superimposition unit (453) when the environment is the passing interval, using the blocking period information.

4. A signal control method to control a signal control device (45) to be used in a communication apparatus (4) capable of wirelessly communicating with a base station (3) via a relay station (2) in an environment in which radio waves are periodically blocked, the communication apparatus (4) comprising:
- a signal control device (45)
- a flow control device (43) to
discontinuously divide data generated by a data generation device (41) so that the data is not transmitted in a blocked interval that is a periodic time during which the radio waves are blocked, but is transmitted in a passing interval that is a periodic time during which the radio waves are not blocked, and
control transmission of discontinuous data that is the data whose transmission timing is adjusted;
- a communication device (44) without a function to compensate for periodic radio wave interference;
the signal control device (45) to control passage or interruption of a transmission signal including a control signal from the communication device (44),
wherein the signal control method comprises:
a duplication and delay control step of duplicating, by the signal control device (45), the control signal to be used for communication with a base station (3) generated by the communication device (44) in a blocked interval that is the periodic time during which the radio waves are blocked, and outputting, by the signal control device (45), a delayed control signal obtained by providing a delay time to a duplicate control signal;
a signal superimposition step of superimposing, by the signal control device (45), the discontinuous data and the control signal or the delayed control signal to generate a transmission signal, and outputting, by the signal control device (45), the transmission signal;
a path switching step of switching, by the signal control device (45), output destinations of the control signal, using blocking period information indicating whether the environment is the passing interval or the blocked interval;
a transmission step of transmitting, by the signal control device (45), the delayed control signal obtained by providing the delay time to the duplicate control signal in the passing interval that is the periodic time during which the radio waves are not blocked, wherein
in the path switching step, when the environment is the blocked interval, processing is switched to the duplication and delay control step, and when the environment is the passing interval, processing is switched to the signal superimposition step; and
a signal interruption step of interrupting, by the signal control device (45), the transmission signal output from the signal control device (45) when the environment is the blocked interval, and passing the transmission signal output from the signal control device (45) when the environment is the passing interval, using the blocking period information.

## Patentansprüche

1. Kommunikationssystem (1), umfassend eine Kommunikationsvorrichtung (4), die in der Lage ist, drahtlos mit einer Basisstation (3) über eine Relaisstation (2) in einer Umgebung zu kommunizieren, in der Funkwellen periodisch blockiert werden,
wobei die Kommunikationsvorrichtung (4) umfasst:
• eine Signalsteuerungsvorrichtung (45);
• eine Flusssteuerungsvorrichtung (43), die dazu eingerichtet ist, von einer Datenerzeugungsvorrichtung (41) erzeugte Daten diskontinuierlich aufzuteilen, so dass die Daten nicht in einem blockierten Intervall übertragen werden, das eine periodische Zeit ist, während der die Funkwellen blockiert sind, sondern in einem Durchlassintervall übertragen werden, das eine periodische Zeit ist, während der die Funkwellen nicht blockiert sind, und die Übertragung von diskontinuierlichen Daten zu steuern, bei denen es sich um die Daten handelt, deren Übertragungszeitpunkt angepasst ist;
• eine Kommunikationsvorrichtung (44) ohne eine Funktion zur Kompensation periodischer Funkwelleninterferenzen;
wobei die Signalsteuerungsvorrichtung (45) zur Steuerung des Durchlasses oder der Unterbrechung eines Übertragungssignals, das ein Steuersignal von der Kommunikationsvorrichtung (44) enthält, umfasst:
• eine Duplizierungs- und Verzögerungssteuerungseinheit (452), die dazu eingerichtet ist, das von der Kommunikationsvorrichtung (44) im blockierten Intervall erzeugte Steuersignal, das für die Kommunikation mit der Basisstation (3) zu verwenden ist, zu duplizieren und ein verzögertes Steuersignal auszugeben, das durch Bereitstellen einer Verzögerungszeit für ein dupliziertes Steuersignal erhalten wird;
• eine Signalüberlagerungseinheit (453), die dazu eingerichtet ist, die diskontinuierlichen Daten und das Steuersignal oder das verzögerte Steuersignal zu überlagern, um ein Übertragungssignal zu erzeugen und das Übertragungssignal auszugeben;
• eine Pfadumschalteinheit (451), die dazu eingerichtet ist, das Steuersignal an die Duplizierungs- und Verzögerungssteuerungseinheit (452) auszugeben, wenn die Umgebung das blockierte Intervall ist, und das Steuersignal an die Signalüberlagerungseinheit (453) auszugeben, wenn die Umgebung das Durchlassintervall ist, unter Verwendung von Blockierungsperiodeninformationen, die angeben, ob die Umgebung das Durchlassintervall oder das blockierte Intervall ist;
• eine Signalunterbrechungseinheit (454), die dazu eingerichtet ist, das von der Signalüberlagerungseinheit (453) ausgegebene Übertragungssignal zu unterbrechen, wenn die Umgebung das blockierte Intervall ist, und das von der Signalüberlagerungseinheit (453) ausgegebene Übertragungssignal durchzulassen, wenn die Umgebung das Durchlassintervall ist, unter Verwendung der Blockierungsperiodeninformationen.

2. Kommunikationssystem (1) nach Anspruch 1, wobei die Duplizierungs- und Verzögerungssteuerungseinheit (452) dazu eingerichtet ist, eine Vielzahl von Duplikaten des Steuersignals anzufertigen und eine Vielzahl der verzögerten Steuersignale, die durch Bereitstellen einer unterschiedlichen Verzögerungszeit für jedes einer Vielzahl von duplizierten Steuersignalen erhalten werden, an die Signalüberlagerungseinheit (453) auszugeben.

3. Kommunikationsvorrichtung (4), die in der Lage ist, drahtlos mit einer Basisstation (3) über eine Relaisstation (2) in einer Umgebung zu kommunizieren, in der Funkwellen periodisch blockiert werden, wobei die Kommunikationsvorrichtung (4) umfasst:
• eine Blockierungsperiodenüberwachungsvorrichtung (42), die dazu eingerichtet ist, einen Zustand der periodischen Blockierung der Funkwellen zu überwachen, ein blockiertes Intervall, das eine Zeit ist, während der die Funkwellen blockiert sind, und ein Durchlassintervall, das eine Zeit ist, während der die Funkwellen nicht blockiert sind, zu erkennen und Erkennungsergebnisse als Blockierungsperiodeninformationen zu erzeugen;
• eine Flusssteuerungsvorrichtung (43), die dazu eingerichtet ist, die Blockierungsperiodeninformationen zu verwenden, diskontinuierliche Daten durch diskontinuierliches Aufteilen der Daten zu erzeugen, so dass die Daten nicht im blockierten Intervall übertragen werden, sondern im Durchlassintervall übertragen werden, und einen Übertragungszeitpunkt der diskontinuierlichen Daten anzupassen und die diskontinuierlichen Daten auszugeben;
• eine Kommunikationsvorrichtung (44), die dazu eingerichtet ist, die diskontinuierlichen Daten und ein zur Steuerung der Kommunikation mit der Basisstation (3) zu verwendendes Steuersignal zu übertragen, wobei die Kommunikationsvorrichtung (44) ohne eine Funktion zur Kompensation periodischer Funkwelleninterferenzen ist; und
• eine Signalsteuerungsvorrichtung (45), die dazu eingerichtet ist, den Durchlass oder die Unterbrechung eines Übertragungssignals, das das Steuersignal von der Kommunikationsvorrichtung (44) enthält, zu steuern, wobei die Signalsteuerungsvorrichtung (45) umfasst:
• eine Duplizierungs- und Verzögerungssteuerungseinheit (452), die dazu eingerichtet ist, das von der Kommunikationsvorrichtung (44) im blockierten Intervall erzeugte Steuersignal, das für die Kommunikation mit der Basisstation (3) zu verwenden ist, zu duplizieren und ein verzögertes Steuersignal auszugeben, das durch Bereitstellen einer Verzögerungszeit für ein dupliziertes Steuersignal erhalten wird;
• eine Signalüberlagerungseinheit (453), die dazu eingerichtet ist, die diskontinuierlichen Daten und das Steuersignal oder das verzögerte Steuersignal zu überlagern, um ein Übertragungssignal zu erzeugen und das Übertragungssignal auszugeben;
• eine Pfadumschalteinheit (451), die dazu eingerichtet ist, das Steuersignal an die Duplizierungs- und Verzögerungssteuerungseinheit (452) auszugeben, wenn die Umgebung das blockierte Intervall ist, und das Steuersignal an die Signalüberlagerungseinheit (453) auszugeben, wenn die Umgebung das Durchlassintervall ist, unter Verwendung von Blockierungsperiodeninformationen, die angeben, ob die Umgebung das Durchlassintervall oder das blockierte Intervall ist;
• eine Signalunterbrechungseinheit (454), die dazu eingerichtet ist, das von der Signalüberlagerungseinheit (453) ausgegebene Übertragungssignal zu unterbrechen, wenn die Umgebung das blockierte Intervall ist, und das von der Signalüberlagerungseinheit (453) ausgegebene Übertragungssignal durchzulassen, wenn die Umgebung das Durchlassintervall ist, unter Verwendung der Blockierungsperiodeninformationen.

4. Signalsteuerungsverfahren zur Steuerung einer Signalsteuerungsvorrichtung (45) zur Verwendung in einer Kommunikationsvorrichtung (4), die in der Lage ist, drahtlos mit einer Basisstation (3) über eine Relaisstation (2) in einer Umgebung zu kommunizieren, in der Funkwellen periodisch blockiert werden, wobei die Kommunikationsvorrichtung (4) umfasst:
• eine Signalsteuerungsvorrichtung (45);
• eine Flusssteuerungsvorrichtung (43), um von einer Datenerzeugungsvorrichtung (41) erzeugte Daten diskontinuierlich aufzuteilen, so dass die Daten nicht in einem blockierten Intervall übertragen werden, das eine periodische Zeit ist, während der die Funkwellen blockiert sind, sondern in einem Durchlassintervall übertragen werden, das eine periodische Zeit ist, während der die Funkwellen nicht blockiert sind, und die Übertragung von diskontinuierlichen Daten zu steuern, bei denen es sich um die Daten handelt, deren Übertragungszeitpunkt angepasst ist;
• eine Kommunikationsvorrichtung (44) ohne eine Funktion zur Kompensation periodischer Funkwelleninterferenzen;
wobei die Signalsteuerungsvorrichtung (45) den Durchlass oder die Unterbrechung eines Übertragungssignals, das ein Steuersignal von der Kommunikationsvorrichtung (44) enthält, steuert,
wobei das Signalsteuerungsverfahren umfasst:
• einen Duplizierungs- und Verzögerungssteuerungsschritt des Duplizierens, durch die Signalsteuerungsvorrichtung (45), des von der Kommunikationsvorrichtung (44) in einem blockierten Intervall, das die periodische Zeit ist, während der die Funkwellen blockiert sind, erzeugten Steuersignals, das für die Kommunikation mit einer Basisstation (3) zu verwenden ist, und des Ausgebens, durch die Signalsteuerungsvorrichtung (45), eines verzögerten Steuersignals, das durch Bereitstellen einer Verzögerungszeit für ein dupliziertes Steuersignal erhalten wird;
• einen Signalüberlagerungsschritt des Überlagerns der diskontinuierlichen Daten und des Steuersignals oder des verzögerten Steuersignals durch die Signalsteuerungsvorrichtung (45), um ein Übertragungssignal zu erzeugen, und des Ausgebens des Übertragungssignals durch die Signalsteuerungsvorrichtung (45);
• einen Pfadumschaltschritt des Umschaltens, durch die Signalsteuerungsvorrichtung (45), von Ausgabezielen des Steuersignals unter Verwendung von Blockierungsperiodeninformationen, die angeben, ob die Umgebung das Durchlassintervall oder das blockierte Intervall ist;
• einen Übertragungsschritt des Übertragens, durch die Signalsteuerungsvorrichtung (45), des verzögerten Steuersignals, das durch Bereitstellen der Verzögerungszeit für das duplizierte Steuersignal erhalten wird, im Durchlassintervall, das die periodische Zeit ist, während der die Funkwellen nicht blockiert sind, wobei im Pfadumschaltschritt, wenn die Umgebung das blockierte Intervall ist, die Verarbeitung auf den Duplizierungs- und Verzögerungssteuerungsschritt umgeschaltet wird, und wenn die Umgebung das Durchlassintervall ist, die Verarbeitung auf den Signalüberlagerungsschritt umgeschaltet wird; und
• einen Signalunterbrechungsschritt des Unterbrechens, durch die Signalsteuerungsvorrichtung (45), des von der Signalsteuerungsvorrichtung (45) ausgegebenen Übertragungssignals, wenn die Umgebung das blockierte Intervall ist, und des Durchlassens des von der Signalsteuerungsvorrichtung (45) ausgegebenen Übertragungssignals, wenn die Umgebung das Durchlassintervall ist, unter Verwendung der Blockierungsperiodeninformationen.

## Revendications

1. Système de communication (1) comprenant un appareil de communication (4) capable de communiquer sans fil avec une station de base (3) via une station de relais (2) dans un environnement dans lequel des ondes radio sont périodiquement bloquées,
l'appareil de communication (4) comprenant :
• un dispositif de commande de signal (45) ;
• un dispositif de régulation de flux (43) adapté pour diviser de manière discontinue des données générées par un dispositif de génération de données (41) de sorte que les données ne soient pas émises dans un intervalle de blocage qui est un temps périodique pendant lequel les ondes radio sont bloquées, mais soient émises dans un intervalle de passage qui est un temps périodique pendant lequel les ondes radio ne sont pas bloquées, et commander la transmission de données discontinues qui sont les données dont la synchronisation d'émission est ajustée ;
• un appareil de communication (44) sans fonction de compensation d'un brouillage d'ondes radio périodique ;
dans lequel le dispositif de commande de signal (45) pour commander le passage ou l'interruption d'un signal d'émission comprenant un signal de commande provenant de l'appareil de communication (44), comprend :
• une unité de commande de duplication et de retard (452) adaptée pour dupliquer le signal de commande à utiliser pour la communication avec la station de base (3) généré par l'appareil de communication (44) dans l'intervalle de blocage, et délivrer en sortie un signal de commande retardé obtenu en appliquant un temps de retard à un signal de commande dupliqué ;
• une unité de superposition de signaux (453) adaptée pour superposer les données discontinues et le signal de commande ou le signal de commande retardé pour générer un signal d'émission, et délivrer en sortie le signal d'émission ;
• une unité de commutation de trajet (451) adaptée pour délivrer en sortie le signal de commande à l'unité de commande de duplication et de retard (452) lorsque l'environnement est l'intervalle de blocage et délivrer en sortie le signal de commande à l'unité de superposition de signaux (453) lorsque l'environnement est l'intervalle de passage, en utilisant des informations de période de blocage indiquant si l'environnement est l'intervalle de passage ou l'intervalle de blocage ;
• une unité d'interruption de signal (454) adaptée pour interrompre le signal d'émission délivré en sortie par l'unité de superposition de signaux (453) lorsque l'environnement est l'intervalle de blocage et laisser passer le signal d'émission délivré en sortie par l'unité de superposition de signaux (453) lorsque l'environnement est l'intervalle de passage, en utilisant les informations de période de blocage.

2. Système de communication (1) selon la revendication 1, dans lequel l'unité de commande de duplication et de retard (452) est adaptée pour réaliser une pluralité de duplicata du signal de commande, et pour délivrer en sortie une pluralité des signaux de commande retardés obtenus en appliquant un temps de retard différent à chacun d'une pluralité de signaux de commande dupliqués à l'unité de superposition de signaux (453).

3. Appareil de communication (4) capable de communiquer sans fil avec une station de base (3) via une station de relais (2) dans un environnement dans lequel des ondes radio sont périodiquement bloquées, l'appareil de communication (4) comprenant :
• un dispositif de surveillance de période de blocage (42) adapté pour surveiller un état de blocage périodique des ondes radio, détecter un intervalle de blocage qui est un temps pendant lequel les ondes radio sont bloquées et un intervalle de passage qui est un temps pendant lequel les ondes radio ne sont pas bloquées, et générer des résultats de détection sous forme d'informations de période de blocage ;
• un dispositif de régulation de flux (43) adapté pour utiliser les informations de période de blocage, générer des données discontinues en divisant de manière discontinue les données de sorte que les données ne soient pas émises dans l'intervalle de blocage mais soient émises dans l'intervalle de passage, et ajuster une synchronisation d'émission des données discontinues et délivrer en sortie les données discontinues ;
• un appareil de communication (44) adapté pour émettre les données discontinues et un signal de commande à utiliser pour commander la communication avec la station de base (3), l'appareil de communication (44) étant sans fonction de compensation d'un brouillage d'ondes radio périodique ; et
• un dispositif de commande de signal (45) adapté pour commander le passage ou l'interruption d'un signal d'émission comprenant le signal de commande provenant de l'appareil de communication (44), dans lequel le dispositif de commande de signal (45) comprend :
• une unité de commande de duplication et de retard (452) adaptée pour dupliquer le signal de commande à utiliser pour la communication avec la station de base (3) généré par l'appareil de communication (44) dans l'intervalle de blocage, et délivrer en sortie un signal de commande retardé obtenu en appliquant un temps de retard à un signal de commande dupliqué ;
• une unité de superposition de signaux (453) adaptée pour superposer les données discontinues et le signal de commande ou le signal de commande retardé pour générer un signal d'émission, et délivrer en sortie le signal d'émission ;
• une unité de commutation de trajet (451) adaptée pour délivrer en sortie le signal de commande à l'unité de commande de duplication et de retard (452) lorsque l'environnement est l'intervalle de blocage et délivrer en sortie le signal de commande à l'unité de superposition de signaux (453) lorsque l'environnement est l'intervalle de passage, en utilisant des informations de période de blocage indiquant si l'environnement est l'intervalle de passage ou l'intervalle de blocage ;
• une unité d'interruption de signal (454) adaptée pour interrompre le signal d'émission délivré en sortie par l'unité de superposition de signaux (453) lorsque l'environnement est l'intervalle de blocage, et laisser passer le signal d'émission délivré en sortie par l'unité de superposition de signaux (453) lorsque l'environnement est l'intervalle de passage, en utilisant les informations de période de blocage.

4. Procédé de commande de signal pour commander un dispositif de commande de signal (45) à utiliser dans un appareil de communication (4) capable de communiquer sans fil avec une station de base (3) via une station de relais (2) dans un environnement dans lequel des ondes radio sont périodiquement bloquées, l'appareil de communication (4) comprenant :
• un dispositif de commande de signal (45) ;
• un dispositif de régulation de flux (43) pour diviser de manière discontinue des données générées par un dispositif de génération de données (41) de sorte que les données ne soient pas émises dans un intervalle de blocage qui est un temps périodique pendant lequel les ondes radio sont bloquées, mais soient émises dans un intervalle de passage qui est un temps périodique pendant lequel les ondes radio ne sont pas bloquées, et commander la transmission de données discontinues qui sont les données dont la synchronisation d'émission est ajustée ;
• un appareil de communication (44) sans fonction de compensation d'un brouillage d'ondes radio périodique ;
le dispositif de commande de signal (45) devant commander le passage ou l'interruption d'un signal d'émission comprenant un signal de commande provenant de l'appareil de communication (44),
dans lequel le procédé de commande de signal comprend :
• une étape de commande de duplication et de retard consistant à dupliquer, par le dispositif de commande de signal (45), le signal de commande à utiliser pour la communication avec une station de base (3) généré par l'appareil de communication (44) dans un intervalle de blocage qui est le temps périodique pendant lequel les ondes radio sont bloquées, et à délivrer en sortie, par le dispositif de commande de signal (45), un signal de commande retardé obtenu en appliquant un temps de retard à un signal de commande dupliqué ;
• une étape de superposition de signaux consistant à superposer, par le dispositif de commande de signal (45), les données discontinues et le signal de commande ou le signal de commande retardé pour générer un signal d'émission, et à délivrer en sortie, par le dispositif de commande de signal (45), le signal d'émission ;
• une étape de commutation de trajet consistant à commuter, par le dispositif de commande de signal (45), des destinations de sortie du signal de commande, en utilisant des informations de période de blocage indiquant si l'environnement est l'intervalle de passage ou l'intervalle de blocage ;
• une étape d'émission consistant à émettre, par le dispositif de commande de signal (45), le signal de commande retardé obtenu en appliquant le temps de retard au signal de commande dupliqué dans l'intervalle de passage qui est le temps périodique pendant lequel les ondes radio ne sont pas bloquées, dans lequel, dans l'étape de commutation de trajet, lorsque l'environnement est l'intervalle de blocage, le traitement est commuté vers l'étape de commande de duplication et de retard, et lorsque l'environnement est l'intervalle de passage, le traitement est commuté vers l'étape de superposition de signaux ; et
• une étape d'interruption de signal consistant à interrompre, par le dispositif de commande de signal (45), le signal d'émission délivré en sortie par le dispositif de commande de signal (45) lorsque l'environnement est l'intervalle de blocage, et à laisser passer le signal d'émission délivré en sortie par le dispositif de commande de signal (45) lorsque l'environnement est l'intervalle de passage, en utilisant les informations de période de blocage.
